# EUROPEAN PATENT APPLICATION

(11) **EP 1 903 372 A1**
(43) Date of publication of application: **26.03.2008**
(21) Application number: 06022266.8
(22) Date of filing: 25.10.2006
(51) Int. Cl.: G02C 5/12

(54) **Nose pads and pad arms for spectacles**

(30) Priority: 22.09.2006 CN 200610152993
(71) Applicant: Pan, Chin-Ming, 234 Yonghe City, Taipei County (TW)
(72) Inventor: Pan, Chin-Ming, 234 Yonghe City, Taipei County (TW)
(74) Representative: Winkler, Andreas Fritz Ernst

(57) **Abstract**

The present invention discloses the integrated nose pads and pad arms and a pair of glasses with the integrated nose pads including dual pad ridges formed thereon, wherein the dual pad ridges respectively have a through hole through therein for connection and fixation. The pad ridges have a cavity to receive the pad arms. A pin is configured and penetrating through the through hole to fix the pad arms. The present invention discloses the integrated nose pads and pad arms and a pair of the glasses with the same. The pair of the glasses with the integrated nose pads and the pad arms includes a rim of glasses, the pad arms and the nose pads. The rim of glasses is connected to both lateral sides of the frame of the glasses, and the pad arms are configured on the middle fringes of the rim of glasses. The pad arms are engaged to the nose pads, and the nose pads further include a pad body having dual pad ridges and a base pad, wherein the middle of the pad ridges respectively have a protrusion to connect with the pad arms, and the nose pads are connected with the glasses by the pad arms, so that the present invention can reach the effects of convenient. The present invention further can omit the usage of the noble metal, lower the costs and reduce the pollution of the toxic gases generated during the welding step.

## Description

### FIELD OF INVENTION

The present invention relates to the nose pads and the pad arms, more specifically, to the integrated nose pads and pad arms. The present invention can lower the costs and simplify the manufacturing processes of the nose pads and the pad arms, also can reduce the toxic gases generated from the welding step. The present invention further can omit the usage of the noble metal.

### BACKGROUND OF INVENTION

With the developments of technologies day by day, monitors, computers, audio-visual equipments are essential tool for people's work. Eyesight health conduction is getting poor due to the eyes focus on the monitor all day, and therefore, the glasses are necessary for the people.

Recently, people have no choice but to watch those audio-visual equipments which are whispered from the public transportation systems to families. If people use those equipments improperly or too long, the health of the eyes will be influence, thereby lowing the condition of eyesight.

However, when people choose the glasses, they may pay much attention on lens and frame of glasses instead of the nose pads. Further, people sometimes complain that the frame of glasses is too loose or tight. If the frame of glasses is too loose, the glasses may easily slide from the nose; if the frame of glasses is too tight, the user may have pains in nose and ears. Nevertheless, the costs of glasses will be higher if the weight of the rim is lighter, and such glasses cannot attract people's attention due to the higher prices. Moreover, the improper glasses may cause people uncomfortable due to there is only one contact point on the nose. Therefore, it is unlikely to purchase a good quality glasses with cheaper price.

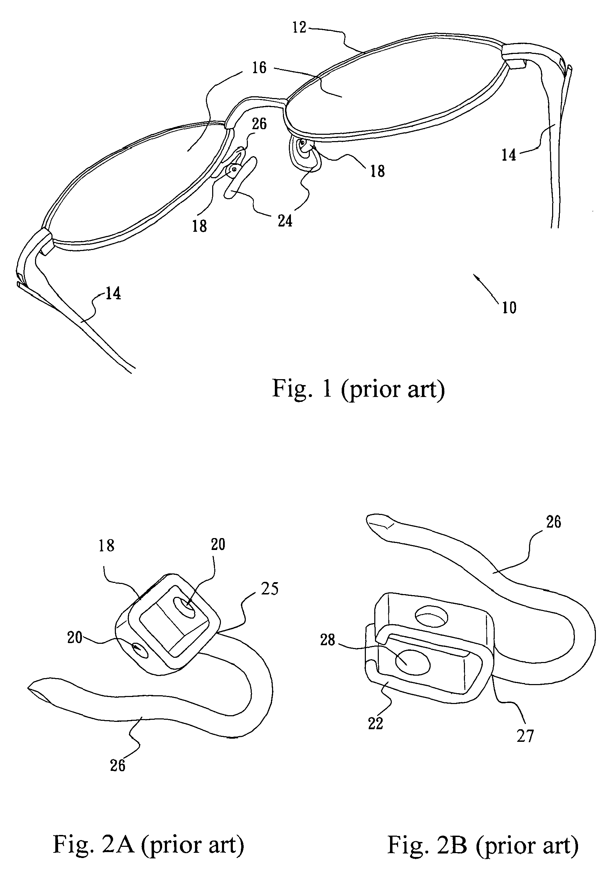

Fig. 1 illustrates a portion of the three-dimensional diagram of a pair of the glasses 10 according to the prior art. The glasses includes the rim of glasses 12, the frame of glasses 14, the lens 16, the screw-type adjustable nose pad 18, the nose pads 24 and the pad arms 26. The rim of glasses 12 connects to both lateral sides of a frame of glasses 14, and the dual pad arms 26 are configured on the middle fringes of frame of glasses 12, such that the glasses can engage to the nose pad 24 by a screw (not shown).

Fig.2A illustrates a diagram of a combination of the screw-type adjustable nose pad 18 and the pad arm 26. Typically, the nose pad 18 is connected to the arm 26 by welding. Both sides of the screw-type adjustable nose pad 18 respectively include a screw hole 20, and are engaged to the pad arm 26 by a screw, then, a welding point 25 is located between the screw-type adjustable nose pad 18 and the pad arm 26. Fig.2B illustrates a diagram of a combination of the click-type adjustable nose pad 22 and the pad arm 26. As usual, they are combined by welding step according to the prior art. Both internal sides of click -type adjustable nose pad 22 respectively include a protrude 28 for fixation, and a welding point 27 is formed between the click -type adjustable nose pad 22 and the pad arm 26. In the prior art, the materials of the screw-type adjustable nose pad 18 and the pad arm 26 are nickel/silver, and the materials of the click -type adjustable nose pad 22 and the pad arm 26 are beryllium-copper. However, the metal materials are too expensive and not economical. Further, additional pad arms and the screws are essential to be added to the glasses for the prior art (as shown in Fig. 1), and thus, the welding or drilling steps are necessary for manufacturing the glasses. The prior art is time-consuming, complicated and harmful to human's health and environment due to the toxic gases are generated during the welding step, therefore, the manufacturing processes of glasses are much complex.

As the above-mentioned problems, the screw-type adjustable nose pad 18 and click-type adjustable nose pad 22 are connected to pad arms 26 by well-known welding step, and drilling steps, and the material is too expensive. Thus, the noble metals are necessary for the glasses, and undesired pollutions will be generated.

As the above-mentioned descriptions, the present invention provides an integrated (or one-piece) nose pad and pad arm and a pair of glasses with the integrated nose pad and pad arm, that can lower costs and simplify processes of the nose pad and the glasses, and also provides much convenience for users. Compared to the prior art, the present invention further provides more economical effects and eliminate the toxic pollution.

### SUMMARY

The present invention will descript some preferred embodiments. However, it is appreciated that the present invention can extensively perform in other embodiments except for these detailed descriptions. The scope of the present invention is not limited to these embodiments and should be accorded the following claims.

One objective of the present invention is to provide the integrated (or one-piece) nose pad and pad arm, which can not only allow lowering the manufacturing costs, but also allow shortening the manufacturing time, such that the present invention can improve the cycle time and simplify the manufactures procedure of the nose pads, the pad arms and the glasses.

Another objective of the present invention is to provide a nose pad which can resolve the prior problems of requiring much time and many materials, and avoid the consuming of natural resources and the risks of the toxic gases generated during welding step.

The present invention discloses an integrated (or one-piece) nose pad and pad arm, the characteristics of the nose pad and pad arm comprising: a pad body including dual pad ridges formed thereon, wherein the pad ridges respectively have a through hole penetrating through the pad ridges for connecting, the pad ridges have a cavity to receive the nose arm; and a pin is configured through the through hole for the fixation of the pad arm. The shape of the pad ridges includes curve, rectangle, square, triangle, and circular or ellipse shape. The characters, texts or patterns, for example, trademarks and types, can be placed on the bottom of the pad body,

In another embodiment of the present invention, the features comprise a pad body including dual pad ridges formed thereon, wherein the internal portions of the pad ridges respectively have a protrude portion for the fixation of the pad arms, and the pad ridges have a cavity to receive the pad arms.

The present invention further can be placed in the glasses. The present invention discloses a pair of the glasses with the integrated (or one-piece) nose pads and pad arms, comprising a rim of glasses connected to both lateral sides of a frame of the glasses, wherein the pad arms are configured on the middle fringes of the glasses frame, and the nose pads are engaged to the pad arms on the middle fringes of the rim of glasses. The nose pads respectively include a pad body and a pad base, wherein the nose pads connected to the glasses by the pad arms. The feature comprises a pad body including dual pad ridges formed thereon, wherein the pad ridges respectively have a through hole penetrating through the pad ridges for connecting. The pad ridges have a cavity to receive the pad arm. A pin is configured and penetrating the through holes for the fixation of the pad arm.

The present invention discloses a pair of the glasses with the integrated (or one-piece) nose pads and welding free pad arms, comprising a rim of glasses connected to both lateral sides of a frame of the glasses, wherein the pad arms are configured on the middle fringes of the glasses frame, and the nose pads are engaged to the pad arms on the middle fringes of the rim of glasses. In one embodiment, the nose pads include a pad body and a pad base, wherein the nose pads are engaged to the glasses by the pad arms, so that the present invention is functional than before.

The present invention discloses an integrated (or one-piece) nose pad and pad arm, which the nose pad includes a pad body and a pad base, and a pad body includes dual pad ridges formed thereon. Further, the internal portions of the pad ridges respectively have a protrude portion for the fixation of the pad arms, and the nose pads are engaged to the glasses, such that the present invention will bring the convenience to users.

### BRIEF DESCRIPTION OF THE DRAWINGS

The foregoing aspects and many of the attendant advantages of this invention will become more readily appreciated as the same becomes better understood by reference to the following detailed description, taken in conjunction with the accompanying drawings, wherein:
Fig.1 illustrates a portion of the three-dimensional diagram of a pair of the glasses according to the prior art.
Fig.2A illustrates a diagram of a combination of the screw-type adjustable nose pad and pad arm during welding step according to the prior art.
Fig.2B illustrates a diagram of a combination of the click-type adjustable nose pad and pad arm during welding step according to the prior art.
Fig.3 illustrates a nose pad according to one embodiment of the present invention.
Fig.4 illustrates a diagram of a pin according to the present invention.
Fig.5 illustrates a front view diagram of a combination of the nose pad and the pin according to the present invention.
Fig.6 illustrates a three-dimensional diagram of a combination of the nose pad and the pin according to the present invention.
Fig.7 illustrates a diagram of a nose pad according to another embodiment of the present invention.
Fig.8 illustrates a separated diagram of a nose pad according to one embodiment of the present invention.
Fig.9A illustrates a front view diagram of a pad arm according to the present invention.
Fig.9B illustrates a lateral view diagram of a pad arm according to the present invention.
Fig.9C illustrates an enlarged diagram of a ring structure according to the present invention.
Fig.10A illustrates a three-dimensional diagram of a combination of the nose pad, the pin and the pad arm according to one embodiment of the present invention.
Fig.10B illustrates a three-dimensional diagram of a combination of the nose pad and the pad arm according to another embodiment of the present invention.
Fig.10C illustrates a three-dimensional a combination of the nose pad, the pin and the pad arm according to yet another embodiment of the present invention.

### DETAILED DESCRIPTION OF THE PREFERRED EMBODIMENTS

In the following description, numerous specific details are provided in order to give a through understanding of embodiments of the invention. Referring now to the following description wherein the description is for the purpose of illustrating the preferred embodiments of the present invention only, and not for the purpose of limiting the same. One skilled in the relevant art will recognize, however, that the invention may be practiced without one or more of the specific details, or with other methods, components, materials, etc.

It is noted that the preferred embodiment is provided to describe the present invention due to give a fast and clear understanding of the invention to one skilled in the art.

As the problems of the prior art, the present invention provides an integrated (or one-piece) nose pad and welding free pad arm and a pair of the glasses with the integrated (or one-piece) nose pads and welding free pad arms, which can lower the costs.

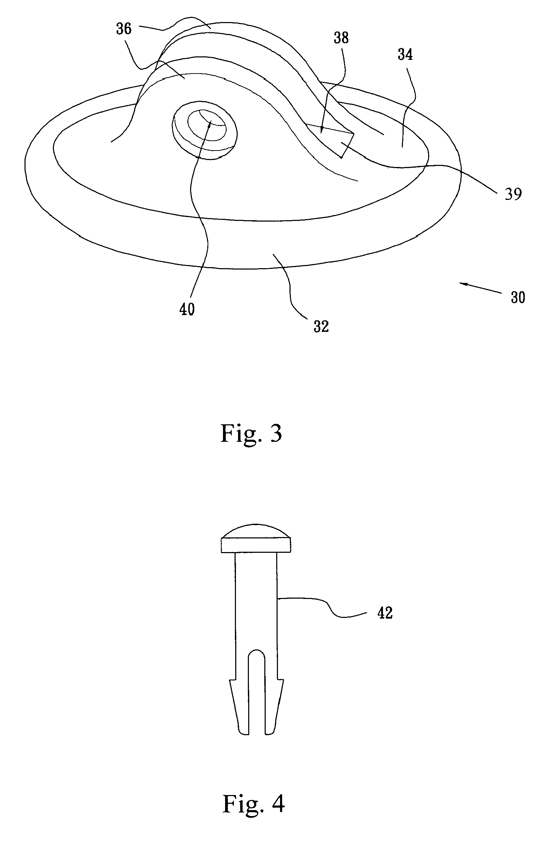

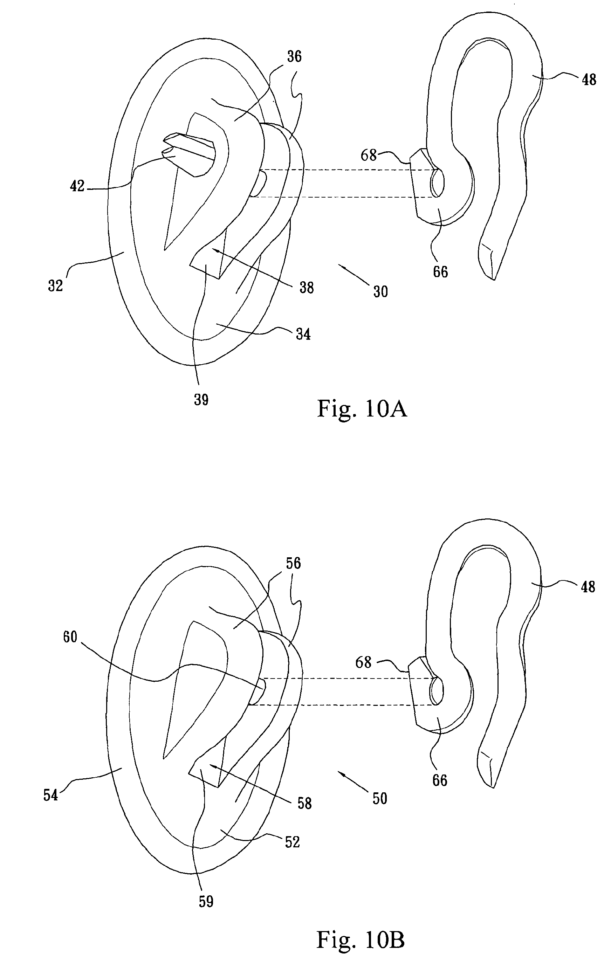

Fig.3 illustrates a nose pad according to one embodiment of the present invention. The nose pad 30 includes a pad base 32, a pad body 34, the pad ridges 36, a cavity 38, a cavity bottom surface 39 and the through holes 40. Pad base 32 is configured below the pad body 34, and the pad body 34 has dual pad ridges 36 formed thereon. The cavity 38 is formed between the twin pad ridges 36 to receive the welding free pad arm 48 (not shown). Further, the welding free pad arm 48 is engaged to the cavity bottom surface 39 formed at the bottom of the cavity 38 (as shown in fig. 10A). Fig.4 illustrates a diagram of a pin 42 according to the present invention.

In one embodiment, the through holes 40 are formed respectively through the dual pad ridges 36 to allow a pin 42 penetrating through the dual pad ridges 36 to fix the welding free pad arm 48. Furthermore, the welding free pad arm 48 can be fixed on the body of the pin 42, so as to engage the welding free pad arm 48 to the glass by the welding free pad arm 48. The end of pin 42 has a protruding portion to allow the pin 42 fixing on the pad ridges 36 of the nose pad 30 after the pin 42 penetrates through the through holes 40.

In one embodiment, the pin 42 is employed to fix the nose pad 30 and the welding free pad arm 48. In the present invention, the pad arm is free of welding process during manufacture.

In one embodiment of the invention, one skilled in the art will recognize that the numbers, shapes, and connection steps of the pad base 32, the pad body 34, the pad ridges 36, the cavity 38 and the pin 42 are not limited by the aforementioned embodiment.

In one embodiment, the shapes of the pad ridges 36 include, but not limited to, curve, rectangle, square, triangle, and circular or ellipse shape, and other various shapes may be used, which can be modified according to the requirements of the users.

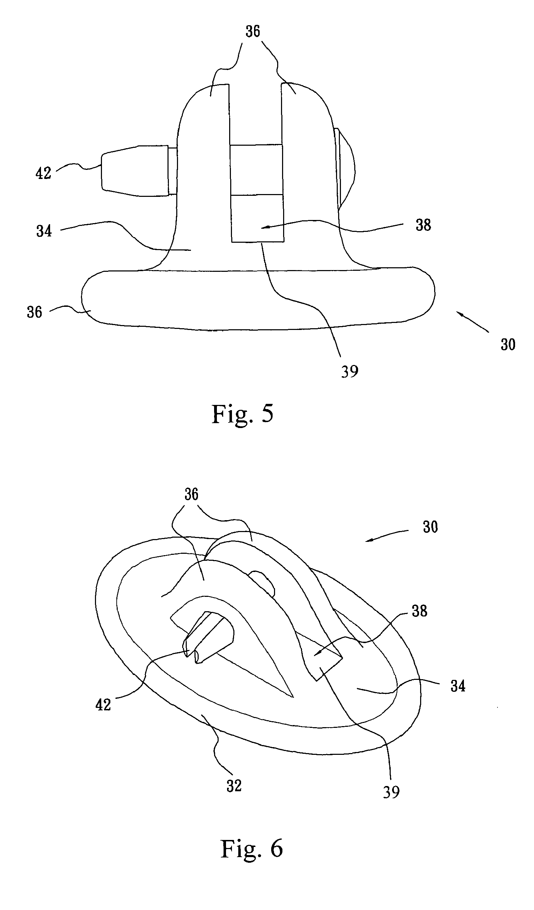

Fig.5 and Fig.6 respectively illustrate a front view and three-dimensional diagram of a combined nose pad 30 and pin 42 according to the present invention. The cavity 38, formed between the twin pad ridges 36 of the pad 30, is used to accumulate and connect the welding free pad arm 48. The pin 42 is penetrating through one through hole 40 of one pad ridge 36, and further penetrating through another through hole 40 of another pad ridge 36 after connecting with the welding free pad arm 48 for fixation.

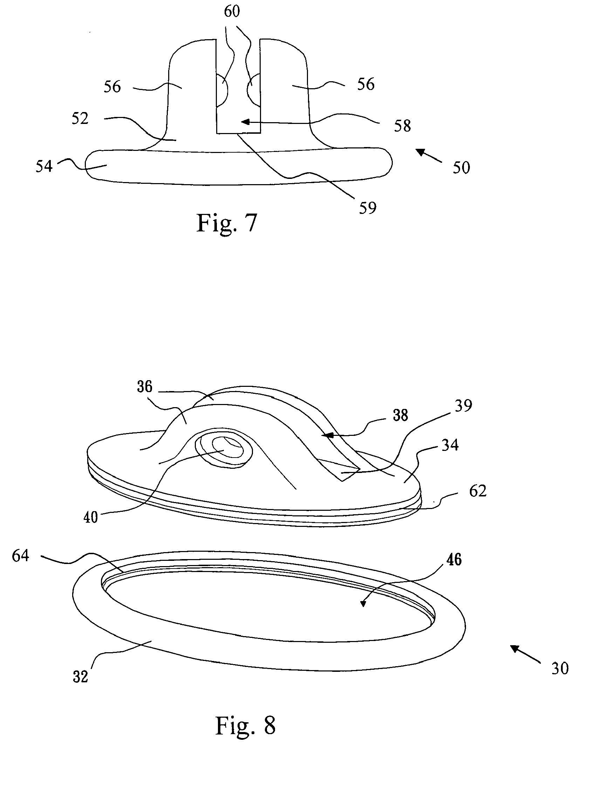

Fig.7 illustrates a diagram of a nose pad 50 according to another embodiment of the present invention. The nose pad 50 includes a pad body 52, a pad base 54, the pad ridges 56, a cavity 58, a cavity bottom surface 59 and the protrusion 60. Pad base 54 is configured below the pad body 52, and the pad body 52 has dual pad ridges 56 formed thereon. The cavity 58 is formed between the dual pad ridges 56 to receive the welding free pad arm 48 (not shown). Further, the welding free pad arm 48 is engaged to the cavity bottom surface 59 formed at the bottom of the cavity 58 (as shown in fig. 10B).

Preferably, the internal portions of the pad ridges 56 of pad body 52 respectively have a protrude 60 for fixing the welding free pad arm 48 (not shown). One skilled in the art will recognize that the shapes of the protrudes 60 include, but not limited to, circular shape under the requirement for fixation of the welding free pad arm 48, it is used to illustrate the present invention rather than limiting the invention.

Fig.8 illustrates a separated diagram of the nose pad 30 according to one embodiment of the present invention. The nose pad 30 includes a pad base 32 and a pad body 34, and a cavity 38 is formed on the pad base 32 to receive the pad body 34. Further, the bottom of the pad body 34 includes the first threads 62 protruding from pad body 34, and the second threads 64 is formed on the edge of the cavity 38 of the pad body 32, such that the first threads 62 and the second threads 64 can be connected via both complementary shapes to engage the pad body 34 and the base pad 32.

In preferred embodiment, the patterns, such as brand name or trademark, may be attached or copied on the surface of the cavity 46. Placing other various characters, texts or patterns on the bottom of the pad body 32 is modified in accordance with user's requirements. In one embodiment, in order to allow the words or patterns can be seen, the material for the cavity 46 surface can be transparent or translucent, and also can be modified according the requirements of the users.

In one embodiment, the pad body 34 and the base pad 32 can be combined by engaging or protruding the first threads 62 and the concave second threads 64.

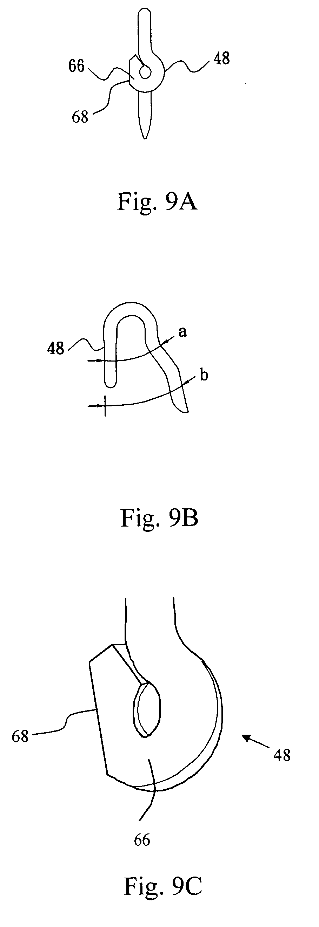

Fig.9A illustrates a front view diagram of a pad arm 48 according to the present invention. One end of the welding free pad arm 48 is shaped to form a ring structure 66, and the ring structure 66 is substantially flat in order to engage to the cavity 38. Further, a fixation plane 68 is formed at one end of the ring structure 66 to being engaged to the bottom plane 39 formed between the pad ridges 36, and connected to the nose pad 30. Therefore, the welding free pad arm 48 is called a fixer for fixing.

Fig.9B illustrates a lateral view diagram of a welding free pad arm 48 according to the present invention. The other end of welding free pad arm 48 is connected to the frame of the glasses. Fig.9C illustrates an enlarged diagram of a ring structure 66 of the welding free pad arm 48 according to the present invention. The ring structure 66 is called a fixer due to a fixing plane 68 configured at one end of the ring structure 66 for fixing the nose pad 30 and the welding free pad arm 48.

In one preferred embodiment, the ring structure 66, formed at one end of welding free pad arm 48, is substantially flat, and one end of ring structure 66 includes fixation plane 68, therefore, the fixation plane 68, formed at one end of ring structure 66, and cavity bottom surface 39, formed on cavity 38 between the pad ridges 36, can be connected. In other words, the fixation plane 68 of the welding free pad arm 48 is attached tightly with the cavity bottom surface 39 of the cavity 38, so that the welding free pad arm 48 can be fixed on the nose pad 30. Undesired rotation between the nose pad 30 and the welding free pad arm 48 can be avoided.

Further, the size of the ring structure 66 of the welding free pad arm 48 is configured in accordance with the size of the cavity 38 between the pad ridges 36, and suitable for the fixation between the nose pad 30 and the welding free pad arm 48.

In one embodiment, the shape of the pad arm 48 includes, but not limited to, curved shape, as shown in Fig. 9. The angle a of the curve shape is approximately between 30 and 40 degrees, and the angle b of curve shape is approximately between 35 and 55 degrees. One skilled in the art will recognize that the ranges of the angle a and b includes, but not limited to, the above-mentioned angles, and the angles is used to describe the present invention rather than limiting the present invention.

In one embodiment, one end of pad arm 48 is configured to form the ring structure 66, and it can be various shapes or non-pressed shapes. Pin 42 is used to penetrate one through hole 40 of one pad ridge 36 to another through hole 40 of another pad ridge 36 following through the ring structure 66 of pad arm 48 in order to combine the welding free pad arm 48, nose pad 50 and the rim of the glasses.

In another embodiment, one end of welding free pad arm 48 is shaped to form the ring structure 66 and is favor to combine with dual protrudes 60 formed at internal side of the dual pad ridges 56, so that the connection of the welding free pad arm 48, the nose pad 50 and the rim of the glasses can be reached.

In one preferred embodiment, the welding free pad arm 48 is engaged to the cavity bottom surface 39 formed at the bottom of the cavity 38 through fixation plane 68 formed at one end of the ring structure 66, so that the welding free pad arm 48 can be attached on the nose pad 30 to prevent the welding free pad arm 48 from being rotated via the pin 42.

One skilled in the art will recognize that the shape of welding free pad arm 48 includes curved shape, and also can be various shapes. The shape can be modified according to user's requirements and different conditions.

Fig.10A illustrates a three-dimensional diagram of a combination of the nose pad 30, the pin 42 and the welding free pad arm 48 according to one embodiment of the present invention. Referring to the drawing, the pin 42 penetrates through one through hole 40 of one pad ridge 36 (not shown) to another through hole 40 of the rest pad ridge 36 in order to engage the nose pad 30, the welding free pad arm 48 and the rim of the glasses.

In one preferred embodiment, one embodiment of the present invention can be a pin-type adjustable integrated nose pad and pad arm.

In one embodiment, a fixation plane 68 is formed at one end of the welding free pad arm 48 shaped to form the ring structure 66, and is favor to combine with the cavity bottom surface 39 formed at cavity 38 between the dual pad ridges 36, so that the connection of the nose pad 30 and the rim of glasses can be reached.

Fig. 10B illustrates a three-dimensional diagram of a combination of the nose pad 50 and the welding free pad arm 48 according to another embodiment of the present invention. Nose pad 50 is connected with the ring structure 66 of welding free pad arm 48 via the fixation plane 68 between the both protrudes 60 formed at inner side of the pad ridges 56, so that the welding free pad arm 48 can be fixed to the nose pad 50.

Preferably, another embodiment of the present invention can be a click-type adjustable integrated nose pad and pad arm.

In the embodiment, the nose pad 50 is connected with the ring structure 66 of the welding free pad arm 48 via the fixation plane 68 between dual protrudes 60 formed at internal side of the pad ridges 56, so that the welding free pad arm 48 can combine with the nose pad 50.

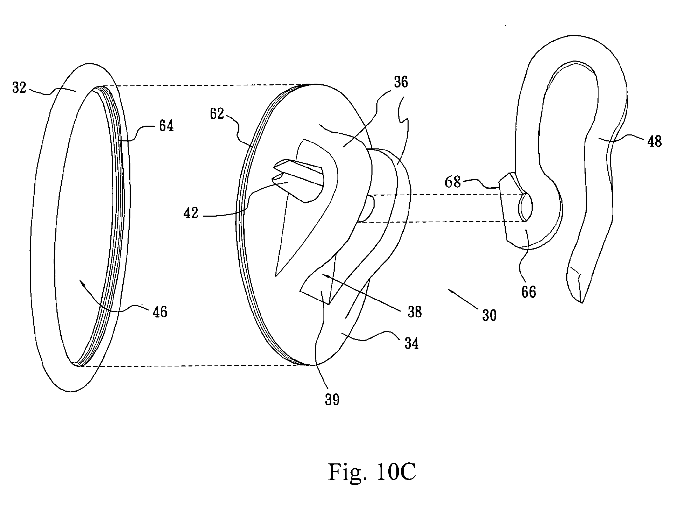

Fig. 10C illustrates a three-dimensional a combination of the nose pad 30, the pin 42 and the welding free pad arm 48 according to yet another embodiment of the present invention. Referring to the drawing, the pin 42 is utilized to penetrate through the through holes 40 of the pad ridges 36 (not shown). Furthermore, the pad body 34 is connected to the base pad 32 via the first threads 62 formed at bottom of the pad body 34 and the second threads 64 formed at the fringe of cavity 46, such that pad body 34 can combine with the base pad 32. Character, text or patterns can be placed on the bottom of the pad body 34.

Still another embodiment of the present invention can be a LOGO-type adjustable integrated nose pad and pad arm.

One skilled in the art will recognize that the nose pad 30 (as shown in Fig.5), which has the through holes 40 formed on both pad ridges 36 and the pin 42 mentioned above also can be the nose pad 50 (as shown in Fig.7), which has the protrusion 60 formed in the inner side of the dual pad ridges 36.

In one preferred embodiment, the materials of present invention include well-known metals, and can be various equivalent or suitable materials. Further, it is noted that additional assemblies or decorations can be placed under the spirits and scopes of the present invention. For example, various pad covers can be added to the present invention to provide user comfort and convenience.

Comparing with the prior art, the advantages of the present invention are shown as follows. In the present invention, the costs and manufacturing processes can be saved and simplified. The present invention can avoid uncomfortable pressure and provide relaxation while wearing the glasses in order to meet different user's requirements.

Another advantage of the present invention is to simplify manufacturing processes, and complex welding step can be omitted. The present invention can solve the problems and lower the risks of toxic gases generated during welding step.

Still another advantage of the present invention is that the cost will be reduced, and none of the noble metal materials will be introduced. Specific technology and equipments are not requires to the present invention.

According to the aspect of the present invention, the present invention can be applied to the full-frame glasses, and also can be applied to various half-frame glasses, rimless glasses and whole-lens glasses, and sunglasses with nose pads or assembly.

As will be understood by a person skilled in the art, the foregoing preferred embodiments of the present invention is illustrative of the present invention, rather than limiting the present invention. Having described the invention in connection with a preferred embodiment, modification will suggest itself to those skilled in the art. Thus, the invention is not to be limited by this embodiment. Rather, the invention is intended to cover various modifications and similar arrangements included within the spirit and scope of the appended claims, the scope of which should be accorded the broadest interpretation so as to encompass all such modifications and similar structures.

## Claims

1. An integrated nose pad and pad arm, the characteristics of said nose pad and said pad arm comprising: a pad body including dual pad ridges formed thereon, wherein said dual pad ridges respectively have a through hole penetrating through said pad ridges for connecting, said pad ridges have a cavity in order to receive said nose pad arm; and a pin configured through said through hole for the fixation of said pad arm.

2. The nose pad and pad arm of claim 1, wherein said pad body includes first threads formed at its bottom and being engaged to a pad base, and said pad base includes second threads to engage to said pad body.

3. The nose pad and pad arm of claim 1, wherein the characters, texts or patterns can be placed on the bottom of said pad body.

4. An integrated nose pad and pad arm, the characteristics of said nose pad and said pad arm comprising: a pad body including dual pad ridges formed thereon, wherein the internal portions of said pad ridges respectively have a protrude portion for the fixation of said pad arm, and said pad ridges have a cavity to receive said pad arm.

5. The nose pad and pad arm of claim 4, wherein said pad body includes first threads formed at its bottom and being engaged to a pad base, said pad base includes second threads to engage to said pad body.

6. The nose pad and pad arm of claim 4, wherein the characters, texts or patterns can be placed on the bottom of said pad body.

7. A pair of the glasses with nose pads and pad arms, comprising:
a rim of glasses connected to both lateral sides of a frame of the glasses, said pad arms configured on the middle fringes of said frame of the glasses;
nose pads engaged to said pad arms on the middle fringes of said rim of glasses, said nose pads respectively including a pad body and a pad base; wherein said nose pads connected to said glasses by said pad arms, the characteristics of said nose pads comprising: a pad body including dual pad ridges formed thereon, wherein said pad ridges respectively have a through hole penetrating through said pad ridges for connecting, said pad ridges have a cavity to receive said pad arm; and a pin configured through said through hole for the fixation of said pad arm, and a ring structure is formed on one end of said pad arm for connecting and fixing to said nose pads.

8. The pair of the glasses of claim 7, wherein said pad body includes first threads formed at its bottom to be engaged to a pad base, and said pad base includes second threads to engage to said pad body, and the characters, texts or patterns can be positioned on the bottom of said pad body.

9. A pair of the glasses with integrated nose pad and pad arm, comprising:
a rim of glasses connected to both lateral sides of a frame of the glasses, said pad arm configured on the middle fringes of said frame of the glasses;
nose pads connected to said pad arm on the middle fringes of said rim of glasses, said nose pads including a pad body and a pad base, said pad body including dual pad ridges formed thereon, wherein the internal portions of said pad ridges respectively have a protrude portion for the fixation of said pad arm, and said both pad ridges have a cavity to receive said pad arm, and a ring structure is formed on one end of said pad arm for connecting and fixing to said nose pads.

10. The pair of the glasses of claim 9, wherein said pad body includes first threads formed at its bottom to be engaged into a pad base, said pad base includes second threads to engage to said pad body, and the characters, texts or patterns can be positioned on the bottom of said pad body.
